# EUROPEAN PATENT SPECIFICATION

(11) **EP 3 333 077 B1**
(45) Date of publication and mention of the grant of the patent: **29.09.2021**
(21) Application number: 18153328.2
(22) Date of filing: 17.02.2012
(51) Int. Cl.: B64D 11/02, B64D 11/04, B64D 11/06

(54) **MODULAR CABIN SEGMENT, CABIN FOR A VEHICLE AND VEHICLE WITH A CABIN**
MODULARES FAHRGASTZELLENSEGMENT, FAHRGASTZELLE FÜR EIN FAHRZEUG UND FAHRZEUG MIT EINER FAHRGASTZELLE
SEGMENT DE CABINE MODULAIRE, CABINE POUR VÉHICULE ET VÉHICULE ÉQUIPÉ D'UNE CABINE

(30) Priority: 18.02.2011 DE 102011011704; 18.02.2011 US 201161444452 P
(43) Date of publication of application: 13.06.2018
(62) Divisional of application: 12704513.6
(73) Proprietor: Airbus Operations GmbH, 21129 Hamburg (DE)
(72) Inventor: Schliwa, Ralf, 21129 Hamburg (DE); Strasdas, Maria, 21129 Hamburg (DE)
(74) Representative: LKGLOBAL Lorenz & Kopf PartG mbB Patentanwälte

(56) References cited:
- EP-A1- 0 170 116
- EP-A2- 0 867 365
- WO-A2-2011/101385
- DE-A1-102006 023 047
- DE-A1-102009 018 690
- FR-A1- 2 910 436
- FR-A1- 2 941 917
- JP-A- H05 163 758
- US-A1- 2004 163 170
- US-A1- 2009 065 641

## Description

### REFERENCE TO RELATED APPLICATIONS

This application is a divisional application of European Patent Application No. 12704513.6, which is based on PCT application PCT/EP2012/052785, filed 17 February 2012.

### TECHNICAL FIELD

The invention relates to a modular cabin segment for a vehicle, to a cabin for a vehicle comprising at least one such modular cabin segment, and to a vehicle with such a cabin.

### BACKGROUND OF THE INVENTION

Vehicles for transporting passengers, which vehicles have a cabin with passenger seats arranged therein, usually need to meet economic expectations so that, in the design of passenger cabins with limited space provided, the largest-possible number of passengers can be transported. In particular if the vehicle is used to travel longer distances, apart from the passenger seats, further equipment features are required in order to ensure passenger wellbeing. Apart from toilets this also relates to equipment for heating, cooling, the preparation and storage of food and drinks.

Parallel to this, in particular in the case of commercial aircraft or other technically complex vehicles, there is also the desire of many operators to design a cabin according to their own wishes. Usually, in the case of aircraft this requirement is met by a number of galley monuments or toilet monuments standardized by the manufacturer of the aircraft. These monuments often separate individual cabin sections from each other in longitudinal direction of the cabin and are often provided so as to be separate from each other.

Furthermore, in particular in commercial aircraft it is a regulatory requirement to provide a cabin attendant seat for each cabin attendant so that each cabin attendant can take up a safe position during takeoff and landing of the aircraft, which cabin attendant seat additionally occupies already confined space in the cabin.

DE 43 00 877 A1 and US 5,474,260 A disclose an aircraft with a number of supply devices and toilets that are designed as independent conventional toilet compartments. WO2011/101385 describes a toilet assembly for a means of transportation comprising a first toilet space, a thereto adjoining second toilet space and a partition located between the first toilet space and the second toilet space, wherein the partition is movably mounted and designed to be moved into an open position in which a separation between the first toilet space and the second toilet space is eliminated. In this way, two relatively small toilet spaces can be converted into a larger toilet space, which is suitable for use by persons having limited mobility. The document further describes an aircraft kitchen.

### SUMMARY OF THE INVENTION

It is thus the object of the invention to propose an advantageous design of a cabin or of a cabin segment, which design allows the best possible use of the available installation space in the cabin while meeting all the regulations and the requirements for comfort.

The object is met by a passenger cabin for a vehicle having a modular cabin segment with the features of the independent claim 1. Advantageous improvements are stated in the subordinate claims.

The core of the invention consists of proposing a modular cabin segment installed at a rear section of the cabin, which cabin segment comprises a modular design. In this context the term "modular" means that various modules tailored to different requirements can be selected and composed in order to be able to provide a cabin segment that is particularly advantageous to the respective operator. The term "module" refers to a part, a component or a section of a finished cabin segment.

Due to the modularity each operator of the vehicle can compose a cabin segment without the need to resort to a cost-intensive individual solution. At the same time this is economically sensible for the manufacturer of the vehicle, because many different variants of a cabin segment can be proposed without the need to conceive protracted and cost-intensive individual solutions.

The use of a rear section makes sense in particular in commercial aircraft, because in them a pressure bulkhead is arranged to delimit the cabin, which pressure bulkhead comprises an outward-curvature that could be used by toilet arrangements.

Below, some references relate to a longitudinal axis, a transverse axis and/or a vertical axis. The term "longitudinal axis" refers to the spatial direction that correlates with a longitudinal axis of the vehicle or with a parallel to the aforesaid, wherein this longitudinal axis can also be the longitudinal axis of a cabin in which the cabin segment according to the invention is arranged. Consequently, the term "transverse axis" relates to an axis that is arranged so as to be perpendicular to the longitudinal axis and that is situated in the horizontal. Accordingly, the term "vertical axis" refers to the axis that extends in vertical direction and that is situated so as to be perpendicular both on the longitudinal axis and on the transverse axis.

### BRIEF DESCRIPTION OF THE DRAWINGS

Figs 1a to If show diagrammatic views of segment modules of a cabin segment in the form of a modular system.
Fig. 2 shows a three-dimensional view of a first exemplary embodiment of the cabin segment.
Fig. 3 shows a three-dimensional view of a further exemplary embodiment of the cabin segment.
Fig. 4 shows a three-dimensional view of a further exemplary embodiment of the cabin segment.
Fig. 5 shows an arrangement comprising a cabin segment in a cabin of a vehicle.
Fig. 6 shows the exemplary embodiment of Fig. 2 with an alternative module segmentation not being part of the present invention but present for illustration purpose only.
Fig. 7 shows the exemplary embodiment of Fig. 3 with an alternative module segmentation not being part of the present invention but present for illustration purpose only.
Fig. 8 shows the exemplary embodiment of Fig. 4 with an alternative module segmentation.
Figs 9a-f show a convertible toilet arrangement in the cabin segment.
Fig. 10 shows an aircraft with a cabin and a cabin segment, which cabin segment is arranged therein.

### DETAILED DESCRIPTION OF EXEMPLARY EMBODIMENTS

Fig. la shows a lateral segment module 2 which in the preceding description was referred to as the second lateral segment module. It comprises an outer lateral face 4 and an inner lateral face 6 that delimit the second lateral segment module 2 in transverse direction or in horizontal direction. In this arrangement the outer lateral face 4 is shaped in such a manner that it can snugly fit to an inner wall of a cabin, and thus is designed so as to correspond to the aforesaid. In the example shown, the outer lateral face 4 is round, thus corresponding to one or several graduated circles of the fuselage of the corresponding vehicle. The inner lateral face 6 is planar and extends in vertical direction so that other modules can join while adapting to the inner lateral face 6.

The second lateral segment module comprises a first parking space 8 and a second parking space 10 that are arranged in a lower half of the second segment module and that follow on from a base 12 that is positionable on a cabin floor. A parking space 8 arranged on the inner lateral face 6 is suitable for accommodating a cabin trolley 14, wherein preferably also locking means (not shown in detail) can be arranged that prevent inadvertent releasing of the cabin trolley 14 from its parking space 8. Preferably, the parking space 8 also comprises means for cooling or means for guiding a cold substance from a central device for proving a cooled coolant to the cabin trolley 14 so that food contained therein can be cooled during operation of the vehicle.

The parking space 10 facing the outer lateral face 4 is also equipped to accommodate a cabin trolley 14, and preferably also to lock it. A further design characteristic of this outer parking space 10 could consist of providing adequate width to accommodate a wheelchair 16 in order to meet any operating regulations of providing in a vehicle, and in particular in an aircraft, the possibility of accommodating a wheelchair.

Since the second lateral segment module 2 adapts to an outer wall of a vehicle fuselage, and consequently the outer lateral face 4 is heavily curved, in the space between the outer parking space 10 and the outer lateral face 4 there is only relatively little design space, which in the present example is used by two storage compartments 18 and 20. The upper of these two storage compartments 20 can, for example, accommodate various objects such as trays or elongated packages comprising food or auxiliary resources required on board the vehicle, for example a wheelchair ("onboard wheelchair").

By means of a horizontal intermediate floor 22 that extends in transverse direction, which horizontal intermediate floor 22 can be designed as a work surface, further storage compartments 24 of various sizes are partitioned off from the parking spaces 8 and 10 and can, in particular, be used for accommodating food that does not need to be cooled.

As an alternative to this, the compartments 24 arranged above the horizontal intermediate floor 22 or the work surface can be designed to accommodate various items of technical equipment which are, for example, used to heat food and drinks.

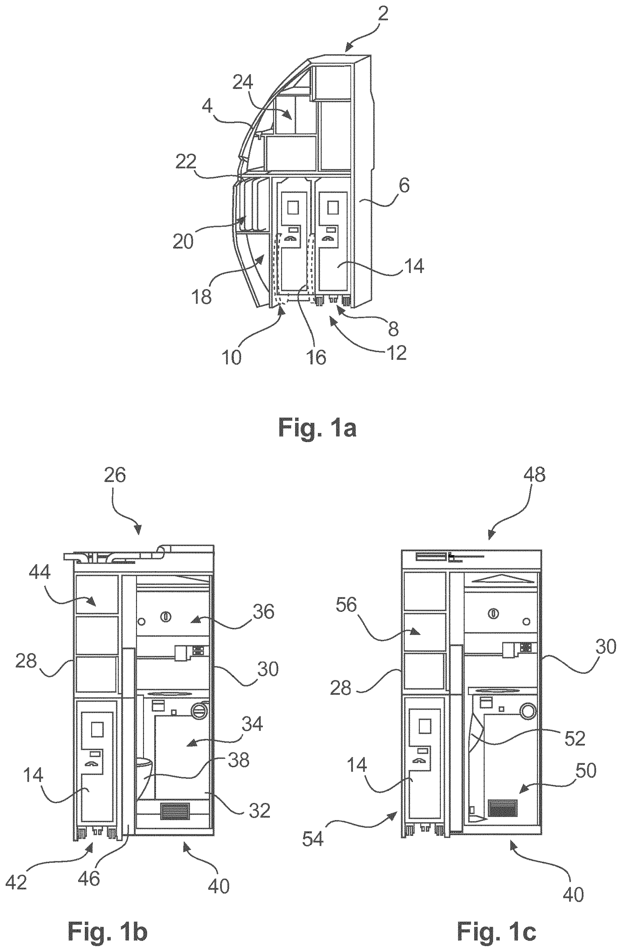

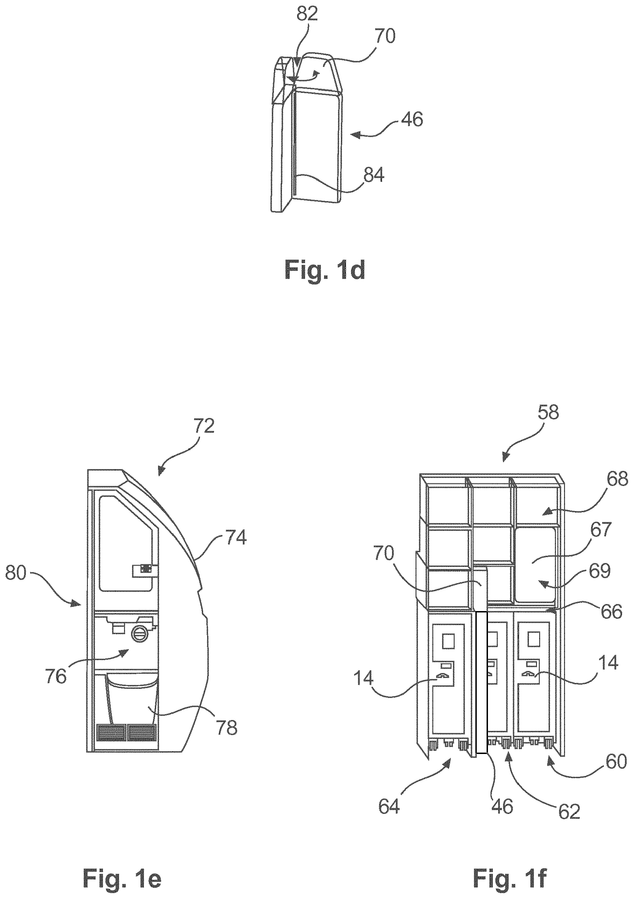

In Fig. 1b as an example a first central module 26 is presented that comprises a first lateral face 28 and a second lateral face 30, which faces delimit the central module 26 in transverse direction. As an example, this central module 26 is designed, in particular, as a toilet module so that an access opening 32 to a toilet compartment 34 is arranged which can be closed by means of a door 36. The toilet compartment 34 itself is of an L-shaped design, wherein a toilet 38 extends in transverse direction so that it is possible to use the remaining design space starting from a rectangular base 40 through a parking space 42 and compartments 44 arranged above.

To avoid excessively limiting the comfort within the toilet compartment 34, the extension, in longitudinal direction, of the parking space 42 and of the compartments 44 is relatively short so that for example in an application in an aircraft only those cabin trolleys 14 can be inserted that comprise half the normal depth. Such cabin trolleys are referred to as half-size trolleys.

This illustration of the central module 26 shows that a cabin attendant seat 46 is provided that is pivotally held on the central module 26. This cabin attendant seat 46 is discussed in detail later.

Fig. 1c shows a further exemplary central module 48 based on the same base 40, except instead of an L-shaped toilet compartment 34 it comprises an essentially rectangular toilet compartment 50 extending in longitudinal direction, which toilet compartment 50, however, comprises a urinal 52 instead of a toilet 38. Said urinal 52 can be used with the person standing upright, and consequently significantly less space is required.

The design space that can be saved in comparison to the central module 26 of Fig. 1b can be utilized by additional depth of the parking space 54 or of the compartments 56 arranged above it. This makes it possible to park more than only one "half-size" cabin trolley 14; for example a normal cabin trolley and a "half-size" cabin trolley could be arranged one behind the other in longitudinal direction, or alternatively three "half-size" cabin trolleys 14. The same applies to the storage compartments 56, which comprise three times the stowage volume of the central module 26 from Fig. 1b.

In particular when designing the cabin of a vehicle, the available toilet arrangements must be assessed because not every passenger requires a complete toilet compartment 34; instead, by providing a urinal 52 with a significantly reduced toilet compartment 50, adequate sanitary installations could be created that would result in significant savings of installation space.

If it is not necessary to equip the cabin segment with an excessive number of toilet arrangements, a central module 58, as shown in Fig. If, could be used.

The central module 58 comprises a total of three parking spaces 60, 62 and 64 in which cabin trolleys 14 can be parked. In this arrangement a parking space 64 extends further outwards in longitudinal direction than is the case with the two other parking spaces 60 and 62, and consequently a cabin attendant seat 46 can be pivotally arranged on the resulting projecting wall. This design furthermore makes it possible to park two conventional cabin trolleys 14 in the parking spaces 60 and 62, as well as a conventional cabin trolley 14 and a "half-size" cabin trolley 14 in the parking space 64, or alternatively three half-size cabin trolleys if desired.

An intermediate floor 66 extends horizontally on the parking spaces 60, 62 and 64, where storage compartments 68 are arranged.

In the illustrated exemplary embodiment of the central module 58 the cabin attendant seat comprises a removable headrest part 70 that in a stowed position of the cabin attendant seat 46 can be removed or folded away in order to allow unrestricted access to the storage compartments 68. When the cabin attendant seat 46 is required, it can be pivoted in front of the parking spaces 60 and 62 and can be equipped again with the removable headrest part 70. While as a consequence of this the parking spaces 60 and 62 or the parking space 64 are blocked, this would, however, occur only at those times when no cabin trolley 14 is moved about, for example during takeoff and landing.

Furthermore, in the central module 58 shown, for the purpose of heating food an oven 67 is arranged which can be operated by way of a pivotally held flap that is useable as a work surface. When the cabin attendant seat 46 is pivoted into the free aisle in front of the module, it may be possible to do without taking off the headrest.

Fig. 1e shows a first lateral segment module 72 that comprises an outer lateral face 74 that is designed so as to correspond to the inner wall of the cabin in the provided installation location. In this variant the lateral segment module 72 comprises a toilet compartment 76 in which a toilet 78 is arranged that extends in longitudinal direction. In this manner with sufficient depth of the segment module 72 a conventional toilet function can be ensured. The inner lateral face 80 is of a planar design and extends vertically so that central modules 26, 48 or 58 can follow on from it.

Finally, Fig. 1d shows a cabin attendant seat 46 with a headrest part 70 that could be designed so as to be removable if this appears to be necessary in a provided stowage position.

On one side 82 the cabin attendant seat 46 comprises a hinge 84 that need not necessarily extend over the entire height of the cabin attendant seat 46. Said hinge 84 could also be positioned only in some locations over the height of the cabin attendant seat 46 in a manner similar to door fittings.

Furthermore, it should be added that the cabin attendant seat 46 is only shown diagrammatically; usually it comprises a fold-down seat surface and suitable seat belt and fastening means so that a cabin attendant can safely sit on said cabin attendant seat 46 and fasten the seat belt. Moreover, it should be mentioned that the pivotally held cabin attendant seat 46 must, of course, also comprise suitable locking means by means of which it can be held safely both in its stowed position and in its in-use position.

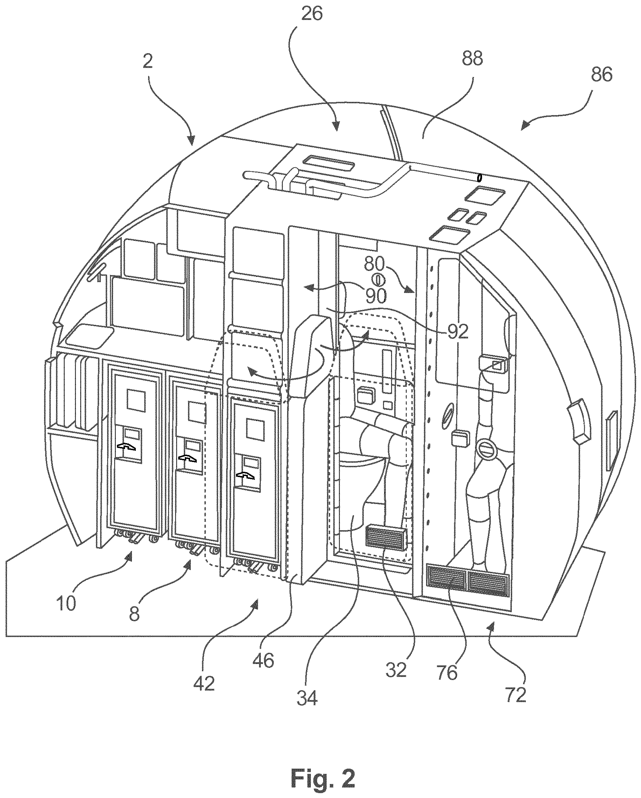

Fig. 2 shows a first exemplary embodiment of a modular cabin segment 86 for us in a cabin according to the invention that is shown as an example of the installation in a cabin of an aircraft. In this example the cabin segment 86 is located in a rear section of the aircraft cabin, in which a pressure bulkhead 88 is also arranged that normally at least in some sections corresponds to a spherical segment. This design space can normally not be fully used, but by arranging the cabin segment 86 in this region, for example in a toilet arrangement, it is possible to provide more space for users than is the case in conventional toilet monuments.

The exemplary embodiment shown is a combination of a second lateral cabin segment 2, a central module 26 and a first lateral segment module 72. Accordingly, in the variant shown, the cabin segment 86 comprises parking spaces for a total of 2 ¹/₂ cabin trolleys, a row of storage compartments 24 and 44, as well as two complete toilet compartments 34 and 76.

As shown in the three-dimensional view of the cabin segment 86, the parking space 42 of the central module 26 extends further into a cabin of the aircraft than does the toilet compartment 34 so that the resulting projecting wall 90, which extends parallel to the longitudinal direction, is suitable for accommodating a cabin attendant seat 46. In this arrangement the access opening 32 is somewhat narrower than the distance between the wall 90 and the inner lateral face 80 of the first lateral segment module so that the hinge of the cabin attendant seat 46 can be arranged on the resulting projection 92, and at the same time the access opening 32 is not blocked. To use the cabin attendant seat 46 it can be pivoted to the entrance opening 32 so that the entrance opening 32 is blocked, which due to the infrequent times when the cabin attendant seat 46 is being used, and the concurrent undesirable use of the toilet, is unproblematic. As an alternative, pivoting in front of the adjacent parking space for a cabin trolley 14 would be imaginable and sensible, because the wall that delimits this parking space 42 is mechanically very strong. Furthermore, because of the mechanical strength the adjacent wall can particularly easily receive a locking means for locking the cabin attendant seat 46. In this variant 3 ¹/₂ cabin trolleys 14 can be accommodated.

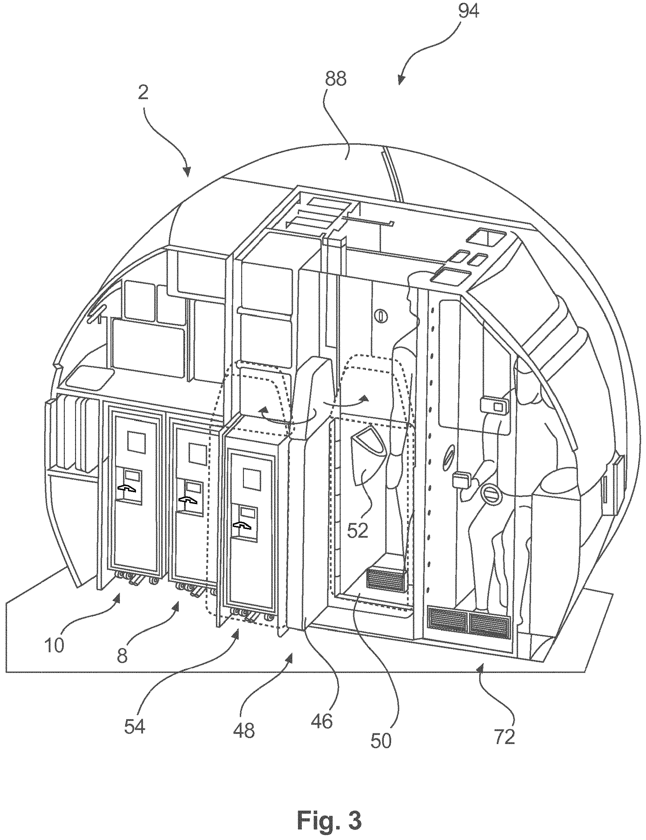

Fig. 3 shows a further modification of a cabin segment 94, in which apart from the second lateral segment module 2 a central module 48 with a urinal 52, and a first lateral segment module that follows on from the aforesaid are used. In this arrangement, too, the cabin attendant seat 46 is arranged on a projection 92 and can be pivoted to an in-use position that blocks an access opening to the toilet compartment 50 or to the parking space 54.

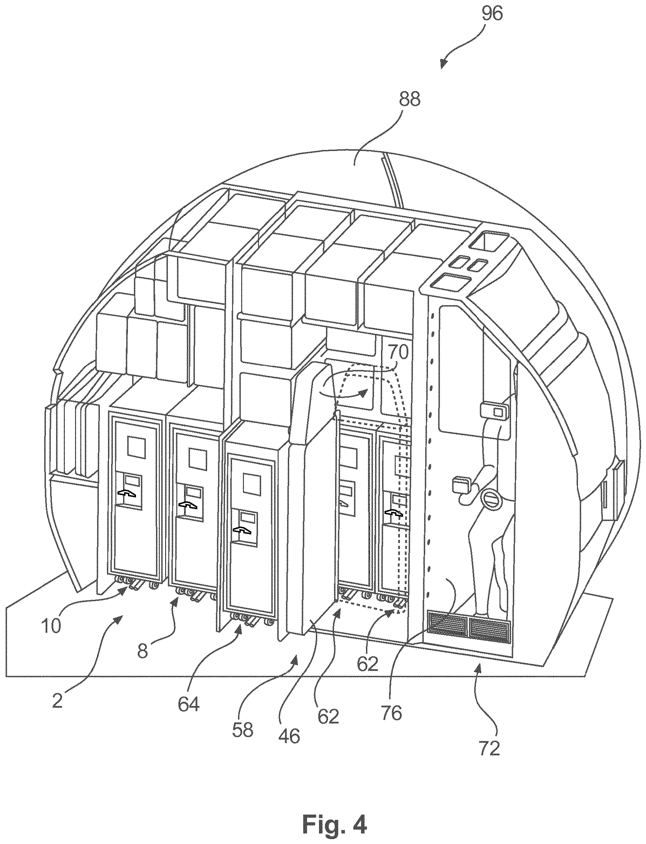

Fig. 4, as an example, shows a further modification of a cabin segment 96 in which a second lateral segment module 2, a central module 58 with parking spaces 60 to 64 and storage compartments 68, as well as a first lateral segment module 72, are used. While this variant only provides a single toilet compartment 76, however, parking spaces for a total of 5 ¹/₂ cabin trolleys 14 are provided, as are a large number of storage compartments for storing food or the like.

This illustration shows particularly clearly that one of the parking spaces 64 of the central module 58 extends significantly further into the cabin in longitudinal direction than do the other parking spaces 60 and 62 or 64, and as a consequence it is very easy to provide adequate design space for the cabin attendant seat 46.

Because of the arrangement of a multitude of storage compartments above the parking spaces for cabin trolleys 14, it is desirable if the headrest part 70 of the cabin attendant seat 46 is designed so as to be removable.

In an in-use position the cabin attendant seat 46 can be pivoted to the parking spaces 60 and 62 or 64 so that the cabin trolley 14 situated therein can no longer be wheeled out. This is also unproblematic because during those times in which the cabin attendant seat 46 is in use, there is no service to passengers anyway, and the cabin trolleys are in place in their respective parking spaces 60 and 62.

In the variant shown, the cabin attendant seat 46 is not arranged on a projection 92; instead it blocks at least in part the parking space 62 of the end of the central module 58, which end faces away from the lateral segment module 72, so that the cabin trolley 14 can be removed from this parking space 62 only when the cabin trolley of the end facing the lateral module segment 72 has been wheeled out. This will be unproblematic when providing service to passengers on board the aircraft; in return, with this variant of the cabin segment 96 very strong integration of many functions, and in particular stowage space, are created.

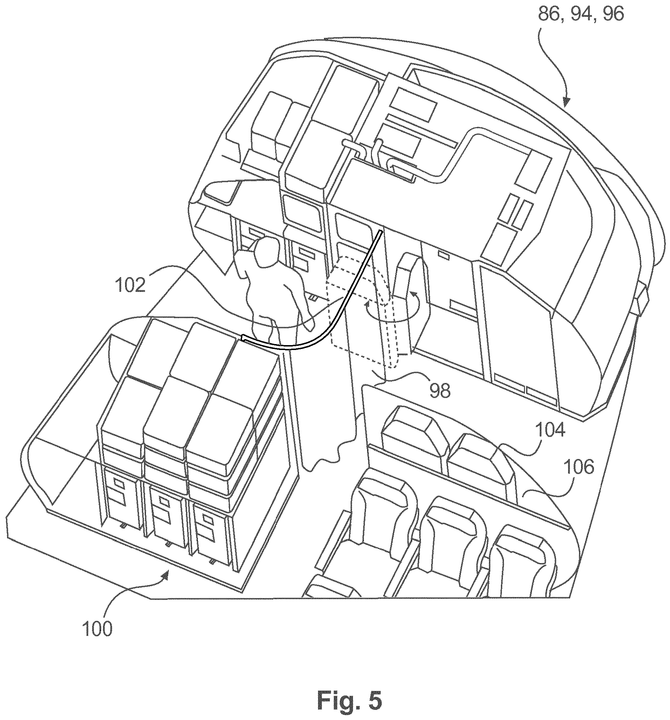

With reference to Fig. 5, it is at least diagrammatically described that part of the cabin segment 86, 94 and 96 can be separated by a dividing curtain 98 from the rest of the cabin, wherein this dividing curtain 98 is particularly preferably arranged in the center and extends towards a cabin monument 100 spaced apart in longitudinal direction and can be guided by way of a curtain rod 102 or the like.

If in this cabin region further cabin attendant seats are necessary, they can be arranged in longitudinal direction on a partition wall or a monument opposite the cabin segment 86, 94 or 96 as diagrammatically shown in Fig. 5 with the example of two cabin attendant seats 104 on a partition wall 106.

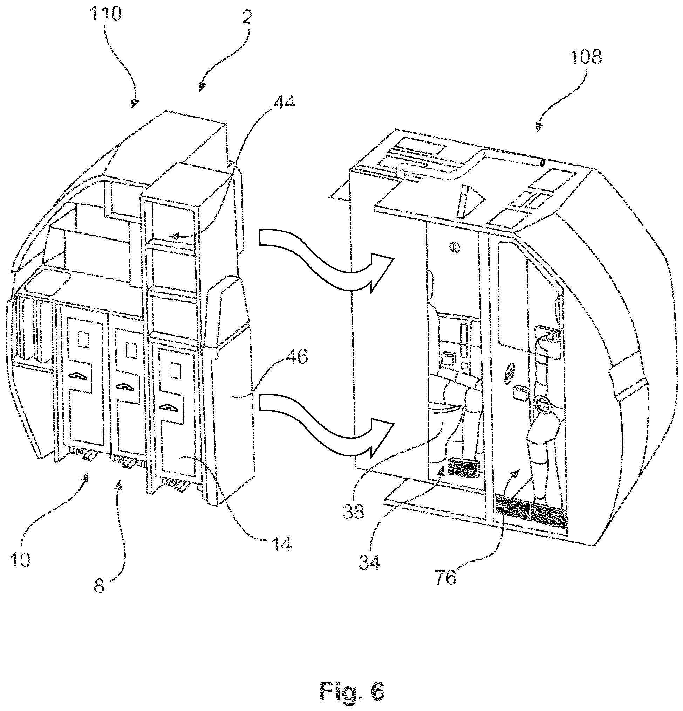

Fig. 6 shows the variant of a cabin segment 86 from Fig. 2 with an alternative design of the segment modules required for this. Instead of coupling a second lateral segment module 2 to a central module 26 and a first lateral segment module 72, at least from the point of view of production technology it may make sense to create a first lateral segment module 108 that exclusively comprises two toilet compartments 76 and 34 as shown in Figs 1b and le. It is understood that instead of the toilet compartment 34 it is also possible to use a modification in the form of a toilet compartment 50 that comprises a urinal 52.

In this example not being part of the present invention but present for illustration purpose only, a second lateral segment module 110 could comprise the second lateral segment module 2 shown in Fig. 1a and a front part of the central module 26 that is arranged beside the toilet compartment 34 and that provides a parking space for a cabin trolley and storage compartments 44. To it the cabin attendant seat 46 that can be pivoted is also affixed.

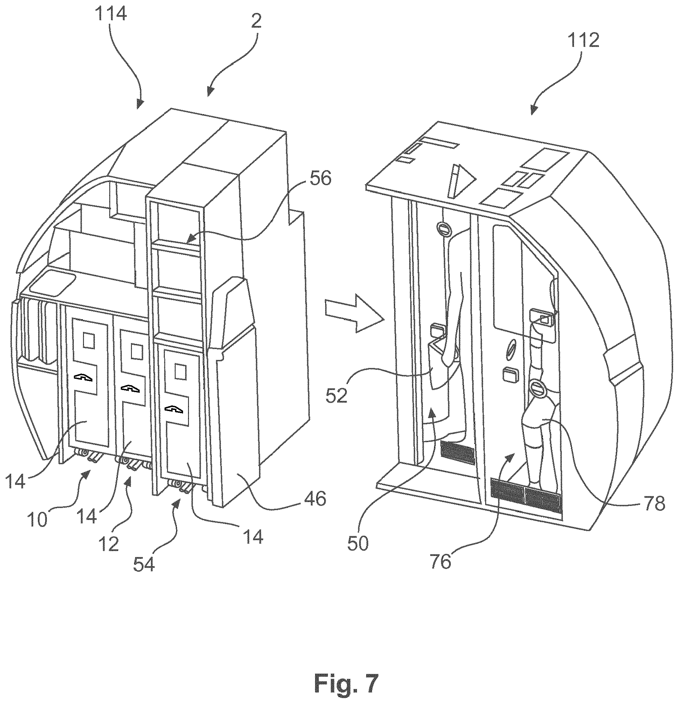

The variation of the arrangement of Fig. 6 for use with a urinal is shown in Fig. 7. There a first lateral segment module 112 is shown which for the purpose of simplifying production steps comprises both a toilet compartment 76 with a toilet 78 and a toilet compartment 50 with a urinal 52.

Likewise, a second lateral segment module 114 is shown which practically is a combination of the second lateral segment module 2 and the arrangement comprising a parking space 54 for a cabin trolley 14 and storage compartments 56 of Fig. 1c adjacent to the toilet compartment 50.

In this arrangement the cabin attendant seat 46 is arranged on the second lateral segment module 114 where it can be pivoted.

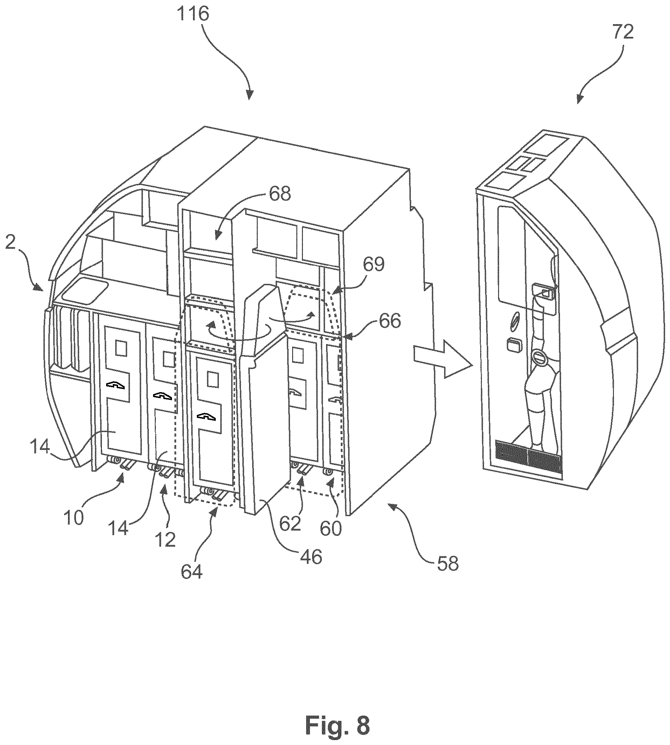

Fig. 8 shows a further variant, in which a first lateral segment module 72 with a second lateral segment module 116 in the form of a second lateral segment module 2 of Fig. 1a combined with a central module 58 of Fig. 1d can be combined.

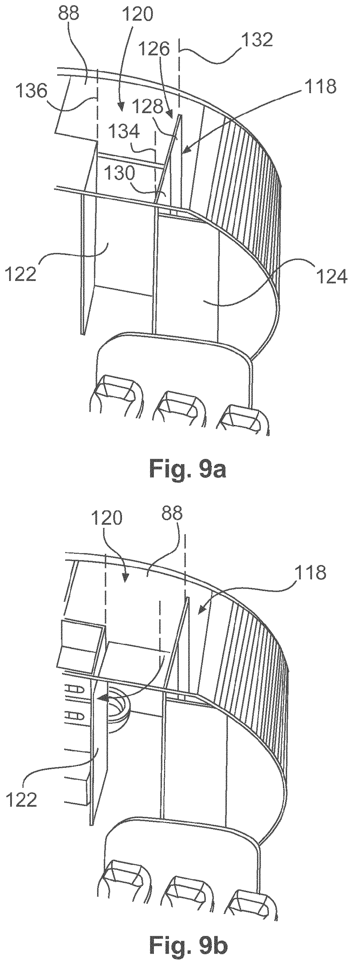

In the further course the optional convertibility of adjacent toilet compartments 118 and 120 is described in detail with reference to Figures 9a to 9f. Said figures show a cabin segment from the preceding Figures 2, 3, 5, 6 or 7, for the sake of simplicity, however, without any persons therein, as well as from a somewhat altered angle of view, and without a detailed illustration of the further integrated functions. The two toilet compartments 118 and 120 of the cabin segment, be it toilet compartments with a toilet or with a urinal, may always be separated by means of a fixed partition wall if the operator of the aircraft does not wish a convertability. The two toilet compartments 118 and 112 may be converted in a few simple steps and preferably without the use of tools, without the addition or removal of components, and without limitations during the flight, preferably by a flight attendant, to form an enlarged toilet compartment. Following the use of this enlarged toilet compartment the toilet arrangement can then be converted back to form two separate toilet compartments.

At first in Fig. 9a the first toilet compartment 120 is closed by a first toilet compartment door 122. The second toilet compartment 118 is also closed by a second toilet compartment door 124. Between the toilet compartments 120 and 118 there is a partition wall 126 comprising a first partition wall segment 128 and a second partition wall segment 130. In the example shown the first partition wall segment 128 is held on a hinge axis 132, and the second partition wall segment 130 is held on a hinge axis 134. In the example shown the two hinge axes 132 and 134 are positioned so as to be spaced apart from each other; consequently, the partition wall 126 is designed as a double-wing door or a double door, and the region situated between the two hinge axes 132 and 134 forms the delimitation in longitudinal direction of the second toilet compartment 118.

In order to connect the two toilet compartments 120 and 118 to form a joint toilet compartment, at first the first toilet compartment door 122 is opened outwards and away from the two toilet compartments 120 and 118 as indicated by an arrow in Fig. 9b. This takes place by means of a pivot movement of the first toilet compartment door 122 on a hinge axis 136 that is arranged on a delimitation wall of the first toilet compartment 120.

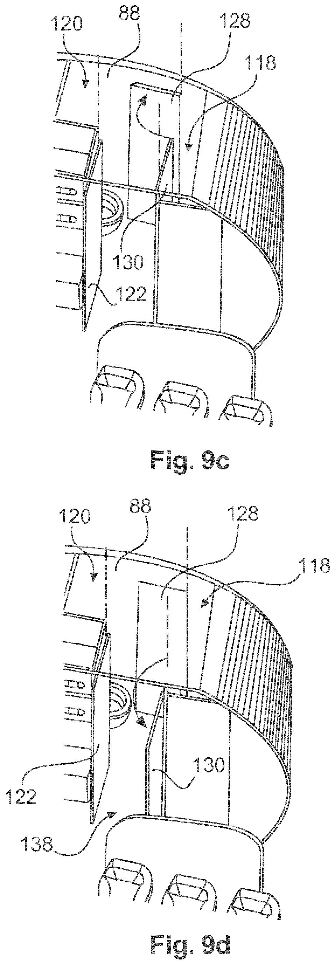

Subsequently, as shown in Fig. 9c, the first partition wall segment 128, after corresponding unlocking from a cabin floor and/or a cabin ceiling and/or the second partition wall segment 130, is moved on the hinge axis 132 towards the pressure bulkhead 88 so that an opening arises between the first toilet compartment 120 and the second toilet compartment 118. In this reached position it is particularly advantageous if the first partition wall segment 128 is locked, and consequently its position is determined until its renewed unlocking.

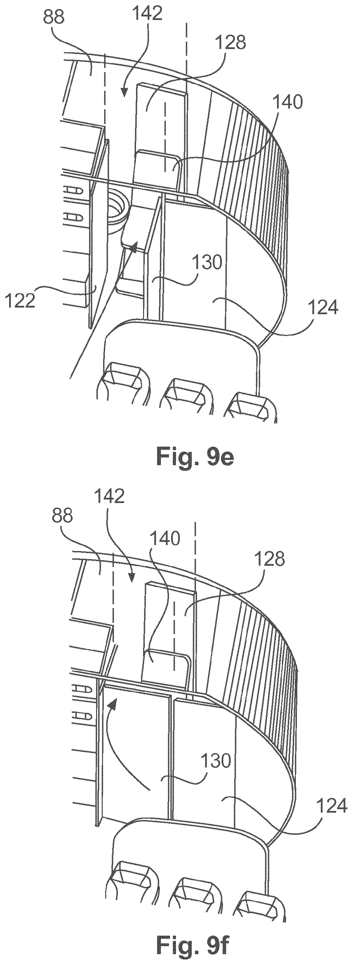

In a further step the second partition wall segment 130, as shown in Fig. 9d, after unlocking from the cabin floor and/or from the cabin ceiling, is moved on the hinge axis 134 by approximately 180° towards the outside so that as a consequence the first toilet compartment 118 and the second toilet compartment 120 are completely interconnected. In this position an opening 138 arises, through which, for example, a person sitting in a wheelchair 140 can effortlessly be moved, or move, into the now joint toilet compartment 142 (Fig. 9e).

After subsequent pivoting of the second partition wall segment 130 on the hinge axis 134 towards the opening 138, separation of the joint toilet compartment 142 towards the outside takes place (Fig. 9f). The second partition wall segment 130 is correspondingly used as the new entrance door to the joint toilet compartment 142. Furthermore, in this arrangement the first toilet compartment door 122 forms a sidewall of the entrance region to the joint toilet compartment 142, which sidewall is arranged so as to be parallel to the direction of extension of the first toilet compartment 118, of the second toilet compartment 120, and at a distance from the second toilet compartment 120.

In the shared toilet compartment 142 there is now adequate space for moving from the wheelchair 140 to a toilet seat or the like. If required, the joint toilet compartment 142 can be converted back to form two separate toilet compartments 118 and 120.

It is thus evident to the average person skilled in the art that the partition wall segments 128 and 130 as well as the first toilet door 122 comprise at least one locking mechanism so that these elements can be locked in the various positions shown in Figures 9a to 9f.

Likewise, it should be ensured that the new toilet compartment door 130 after conversion to form a larger toilet compartment is locked from the inside so as to prevent access by third parties. However, if required, it should be possible for a flight attendant to unlock at least one of the two toilet compartment doors 122, 124 from the outside when help is required.

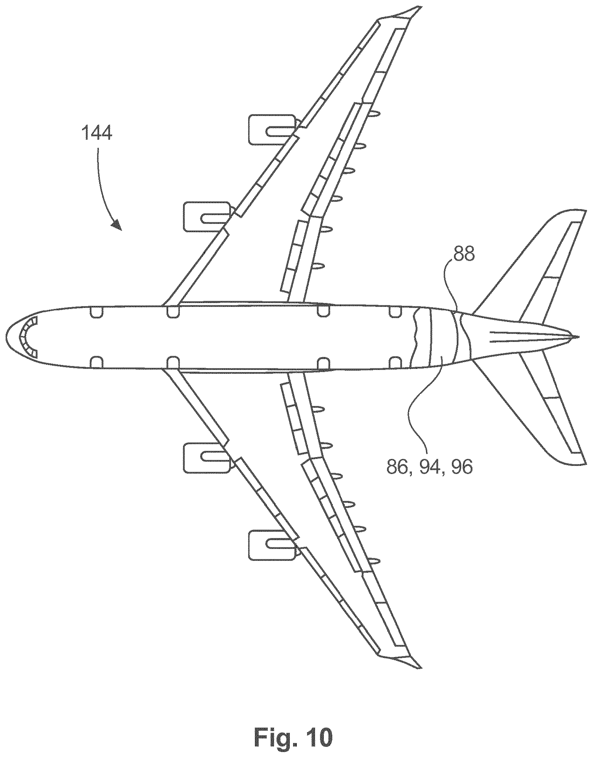

Finally, Fig. 10 shows an aircraft 144 with a passenger cabin in which as an example there is a cabin segment 86, 94 or 96.

In addition, it should be pointed out that "comprising" does not exclude other elements or steps, and "a" or "one" does not exclude a plural number. Reference characters in the claims are not to be interpreted as limitations.

### LIST OF REFERENCE CHARACTERS

- 2: Lateral segment module
- 4: Outer lateral face
- 6: Inner lateral face
- 8: First parking space
- 10: Second parking space
- 12: Base
- 14: Cabin trolley
- 16: Wheelchair
- 18: Storage compartment
- 20: Storage compartment
- 22: Intermediate floor / work surface
- 24: Storage compartment
- 26: Central module
- 28: First lateral face
- 30: Second lateral face
- 32: Access opening
- 34: Toilet compartment
- 36: Door
- 38: Toilet
- 40: Base
- 42: Parking space
- 44: Compartment
- 46: Cabin attendant seat
- 48: Central module
- 50: Toilet compartment
- 52: Urinal
- 54: Parking space
- 56: Compartment
- 58: Central module
- 60: Parking space
- 62: Parking space
- 64: Parking space
- 66: Intermediate floor
- 67: Oven
- 68: Storage compartment
- 69: Flap
- 70: Headrest part
- 72: First lateral segment module
- 74: Outer lateral face
- 76: Toilet compartment
- 78: Toilet
- 80: Inner lateral face
- 82: Side
- 84: Hinge
- 86: Cabin segment
- 88: Pressure bulkhead
- 90: Wall
- 92: Projection
- 94: Cabin segment
- 96: Cabin segment
- 98: Dividing curtain
- 100: Cabin monument
- 102: Curtain rod
- 104: Cabin attendant seat
- 106: Partition wall
- 108: First lateral segment module
- 110: Second lateral segment module
- 112: First lateral segment module
- 114: Second lateral segment module
- 116: Second lateral segment module
- 118: Toilet compartment
- 120: Toilet compartment
- 122: First toilet compartment door
- 124: Second toilet compartment door
- 126: Partition wall
- 128: First partition wall segment
- 130: Second partition wall segment
- 132: Hinge axis
- 134: Hinge axis
- 136: Hinge axis
- 138: Opening
- 140: Wheelchair
- 142: Joint toilet compartment
- 144: Aircraft

## Claims

1. A passenger cabin for a vehicle (144) having a modular cabin segment (86, 94, 96) arranged in a rear section of the passenger cabin, in which a passage through the cabin segment (86, 94, 96) is not required, the cabin segment (86, 94, 96) comprising
- a first lateral segment module (72, 108, 112) that accommodates a first toilet arrangement with at least one toilet compartment (76),
- a second lateral segment module (2, 110, 114, 116), wherein each of the first and second lateral segment modules comprises an outer lateral face (4,74) and an inner lateral face (6,80) that delimit each of the first and second lateral segment modules in transverse direction of the cabin, and
- at least one central module (26, 48, 58),
wherein the at least one central module (26, 48, 58) is arranged between the first lateral segment module (72, 108, 112) and the second lateral segment module (2, 110, 114, 116),
wherein the at least one central module (26, 48, 58) comprises a first lateral face (28) and a second lateral face (30), which faces delimit the central module (26, 48, 58) in the transverse direction of the cabin,
wherein in each case the outer lateral face (4, 74) of the first lateral segment module (72, 108, 112) and of the second lateral segment module (2, 110, 114, 116) is designed to snugly fit in each case to an inner wall of the cabin of the vehicle so as to correspond to the inner wall,
wherein the second lateral segment module (2, 110, 114, 116) is a galley module, and
wherein the cabin segment extends in a transverse axis from a sidewall of the cabin up to the opposite sidewall.

2. The passenger cabin of claim 1,
wherein at least one of the modules (2, 72, 108, 110, 112, 114, 116) comprises at least one cabin attendant seat (46, 104) that on one side is supported on the at least one module (2, 72, 108, 110, 112, 114, 116) so that it is pivotable on an axis.

3. The passenger cabin of claim 1 or 2,
wherein a cabin attendant seat (46, 104) is supported on the at least one module (2, 72, 108, 110, 112, 114, 116) in such a manner that it is pivotable either in front of a toilet arrangement or in front of a storage compartment.

4. The passenger cabin of any one of the preceding claims,
wherein the second lateral segment module (2, 110, 114, 116) comprises at least one parking space (8, 10, 42, 54, 60, 62, 64) for a cabin trolley (14) and at least one storage compartment (18, 20, 24) for accommodating objects.

5. The passenger cabin of any one of the preceding claims,
wherein a parking space (8, 10, 42, 54, 60, 62, 64) of the second lateral segment module (2, 110, 114, 116) comprises dimensions that allow to accommodate a wheelchair (16, 140) in its folded state.

6. The passenger cabin of any one of the preceding claims,
wherein the at least one central module (26, 48, 58) accommodates a second toilet arrangement with at least one toilet compartment (34, 50, 118, 120).

7. The passenger cabin of claim 6,
wherein the second toilet arrangement is arranged on a side of the central module (26, 48, 58), which side faces the first toilet arrangement.

8. The passenger cabin of claim 6 or 7,
wherein the at least one central module (26, 48, 58) comprises at least one parking space (42, 54, 60, 62, 64) for at least one cabin trolley (14) and at least one storage compartment (44, 56, 68), and
wherein the cabin attendant seat (46, 104) is supported on the at least one central module (26, 48, 58) in such a manner that it is pivotable in front of an access opening of the second toilet arrangement.

9. The passenger cabin of any one of the preceding claims,
wherein at least part of a central module (26, 48, 58) and a lateral segment module (2, 72, 108, 110, 112, 114, 116) are interconnected in the form of an enlarged lateral segment module (110, 114, 116).

10. The passenger cabin of claims 6 or 7 and 8,
wherein the second toilet arrangement has at least one toilet compartment (50) that comprises a urinal (52), which toilet compartment (50) is arranged in a transverse direction beside the at least one storage compartment.

11. The passenger cabin of any one of claims 6 to 10,
wherein a partition wall (126) is arranged between a first toilet compartment (120) and an adjacent second toilet compartment (118), wherein the partition wall (126) is movably held and is designed to be brought to an opening position in which separation between the first toilet compartment (120) and the second toilet compartment (118) is canceled.

12. The passenger cabin of claim 11,
wherein the partition wall (126) is designed from two individual partition wall segments (128, 130) that are movably held.

13. The passenger cabin of claim 11 or 12, wherein a first partition wall segment (128) is designed to be folded to a first sidewall of the first toilet compartment, while the second partition wall segment (130) is designed to be pivoted into a region that is not situated in the first toilet compartment (120) or in the second toilet compartment (118).

14. The passenger cabin of any one of claims 11 to 13, wherein a direction of extension of the first toilet compartment (120) and a direction of extension of the second toilet compartment (118) are arranged so as to be essentially perpendicular to each other.

## Patentansprüche

1. Passagierkabine für ein Fahrzeug (144) mit einem modularen Kabinensegment (86, 94, 96), das in einem hinteren Bereich der Passagierkabine angeordnet ist, in dem kein Durchtritt durch das Kabinensegment (86, 94, 96) erforderlich ist, wobei das Kabinensegment (86, 94, 96) Folgendes umfasst:
- ein erstes laterales Segmentmodul (72, 108, 112), in dem eine erste Toilettenanordnung mit mindestens einem Toilettenabteil (76) untergebracht ist, und
- ein zweites laterales Segmentmodul (2, 110, 114, 116),
wobei sowohl das erste als auch das zweite laterale Segmentmodul eine äußere laterale Seite (4, 74) und eine innere laterale Seite (6, 80) umfasst, die sowohl das erste als auch das zweite laterale Segmentmodul in Querrichtung der Kabine begrenzen, und
- mindestens ein zentrales Modul (26, 48, 58), wobei das mindestens eine zentrale Modul (26, 48, 58) zwischen dem ersten lateralen Segmentmodul (72, 108, 112) und dem zweiten lateralen Segmentmodul (2, 110, 114, 116) angeordnet ist, wobei das mindestens eine zentrale Modul (26, 48, 58) eine erste laterale Seite (28) und eine zweite laterale Seite (30) umfasst, wobei die Seiten das zentrale Modul (26, 48, 58) in der Querrichtung der Kabine begrenzen,
wobei in jedem Fall die äußere laterale Seite (4, 74) des ersten lateralen Segmentmoduls (72, 108, 112) und des zweiten lateralen Segmentmoduls (2, 110, 114, 116) dahingehend konstruiert ist, in jedem Fall passgenau mit einer Innenwand der Kabine des Fahrzeugs zusammenzupassen, so dass sie der Innenwand entspricht,
wobei das zweite laterale Segmentmodul (2, 110, 114, 116) ein Bordküchenmodul ist, und
wobei sich das Kabinensegment auf einer Querachse von einer Seitenwand der Kabine bis zur gegenüberliegenden Seitenwand erstreckt.

2. Passagierkabine nach Anspruch 1,
wobei mindestens eines der Module (2, 72, 108, 110, 112, 114, 116) mindestens einen Kabinenpersonalsitz (46, 104) umfasst, der auf einer Seite an dem mindestens einen Modul (2, 72, 108, 110, 112, 114, 116) derart gestützt wird, dass er auf einer Achse schwenkbar ist.

3. Passagierkabine nach Anspruch 1 oder 2,
wobei ein Kabinenpersonalsitz (46, 104) an dem mindestens einen Modul (2, 72, 108, 110, 112, 114, 116) derart gestützt wird, dass er entweder vor einer Toilettenanordnung oder vor einem Aufbewahrungsfach schwenkbar ist.

4. Passagierkabine nach einem der vorhergehenden Ansprüche,
wobei das zweite laterale Segmentmodul (2, 110, 114, 116) mindestens einen Abstellplatz (8, 10, 42, 54, 60, 62, 64) für einen Kabinenwagen (14) und mindestens ein Aufbewahrungsfach (18, 20, 24) zur Unterbringung von Gegenständen umfasst.

5. Passagierkabine nach einem der vorhergehenden Ansprüche,
wobei ein Abstellplatz (8, 10, 42, 54, 60, 62, 64) des zweiten lateralen Segmentmoduls (2, 110, 114, 116) Abmessungen umfasst, die die Unterbringung eines zusammengeklappten Rollstuhls (16, 140) gestatten.

6. Passagierkabine nach einem der vorhergehenden Ansprüche,
wobei in dem mindestens einen zentralen Modul (26, 48, 58) eine zweite Toilettenanordnung mit mindestens einem Toilettenabteil (34, 50, 118, 120) untergebracht ist.

7. Passagierkabine nach Anspruch 6,
wobei die zweite Toilettenanordnung auf einer Seite des zentralen Moduls (26, 48, 58) angeordnet ist, die zu der ersten Toilettenanordnung weist.

8. Passagierkabine nach Anspruch 6 oder 7,
wobei das mindestens eine zentrale Modul (26, 48, 58) mindestens einen Abstellplatz (42, 54, 60, 62, 64) für mindestens einen Kabinenwagen (14) und mindestens ein Aufbewahrungsfach (44, 56, 68) umfasst, und
wobei der Kabinenpersonalsitz (46, 104) an dem mindestens einen zentralen Modul (26, 48, 58) derart gestützt wird, dass er vor einer Zugangsöffnung der zweiten Toilettenanordnung schwenkbar ist.

9. Passagierkabine nach einem der vorhergehenden Ansprüche,
wobei zumindest ein Teil eines zentralen Moduls (26, 48, 58) und ein laterales Segmentmodul (2, 72, 108, 110, 112, 114, 116) in Form eines vergrößerten lateralen Segmentmoduls (110, 114, 116) miteinander verbunden sind.

10. Passagierkabine nach Anspruch 6 oder 7 und 8, wobei die zweite Toilettenanordnung mindestens ein Toilettenabteil (50), das ein Urinal (52) umfasst, umfasst, wobei das Toilettenabteil (50) in einer Querrichtung neben dem mindestens einen Aufbewahrungsfach angeordnet ist.

11. Passagierkabine nach einem der Ansprüche 6-10, wobei eine Trennwand (126) zwischen einem ersten Toilettenabteil (120) und einem angrenzenden zweiten Toilettenabteil (118) angeordnet ist, wobei die Trennwand (126) beweglich gehalten wird und dahingehend konstruiert ist, in eine Öffnungsposition gebracht zu werden, in der die Abtrennung zwischen dem ersten Toilettenabteil (120) und dem zweiten Toilettenabteil (118) aufgehoben wird.

12. Passagierkabine nach Anspruch 11,
wobei die Trennwand (126) aus zwei einzelnen Trennwandsegmenten (128, 130), die beweglich gehalten werden, konstruiert ist.

13. Passagierkabine nach Anspruch 11 oder 12, wobei ein erstes Trennwandsegment (128) dahingehend konstruiert ist, zu einer ersten Seitenwand des ersten Toilettenabteils geklappt zu werden, während das zweite Trennwandsegment (130) dahingehend konstruiert ist, in einen Bereich, der sich nicht in dem ersten Toilettenabteil (120) oder in dem zweiten Toilettenabteil (118) befindet, geschwenkt zu werden.

14. Passagierkabine nach einem der Ansprüche 11-13, wobei eine Erstreckungsrichtung des ersten Toilettenabteils (120) und eine Erstreckungsrichtung des zweiten Toilettenabteils (118) dahingehend angeordnet sind, im Wesentlichen senkrecht zueinander zu sein.

## Revendications

1. Cabine de passagers pour véhicule (144) ayant un segment de cabine modulaire (86, 94, 96) disposé dans une section arrière de la cabine de passagers, dans laquelle un passage à travers le segment de cabine (86, 94, 96) n'est pas nécessaire, le segment de cabine (86, 94, 96) comprenant
- un premier module de segment latéral (72, 108, 112) qui accueille un premier agencement de toilettes avec au moins un compartiment de toilettes (76),
- un second module de segment latéral (2, 110, 114, 116), chacun des premier et second modules de segment latéral comprenant une face latérale extérieure (4, 74) et une face latérale intérieure (6, 80) qui délimitent chacun des premier et second modules de segment latéral dans la direction transversale de la cabine, et
- au moins un module central (26, 48, 58),
l'au moins un module central (26, 48, 58) étant disposé entre le premier module de segment latéral (72, 108, 112) et le second module de segment latéral (2, 110, 114, 116),
l'au moins un module central (26, 48, 58) comprenant une première face latérale (28) et une seconde face latérale (30), lesquelles faces délimitent le module central (26, 48, 58) dans la direction transversale de la cabine,
la face latérale extérieure (4, 74) du premier module de segment latéral (72, 108, 112) et du second module de segment latéral (2, 110, 114, 116) est conçue pour s'adapter de manière ajustée à une paroi intérieure de la cabine du véhicule, de manière à correspondre à la paroi intérieure,
le second module de segment latéral (2, 110, 114, 116) étant un module d'office, et
le segment de cabine s'étendant selon un axe transversal depuis une paroi latérale de la cabine jusqu'à la paroi latérale opposée.

2. Cabine de passagers selon la revendication 1, dans laquelle au moins un des modules (2, 72, 108, 110, 112, 114, 116) comprend au moins un siège d'agent de bord (46, 104) qui, d'un côté, est supporté sur l'au moins un module (2, 72, 108, 110, 112, 114, 116) de manière à pouvoir pivoter sur un axe.

3. Cabine de passagers selon la revendication 1 ou 2, dans laquelle un siège d'agent de bord (46, 104) est supporté sur l'au moins un module (2, 72, 108, 110, 112, 114, 116) de telle sorte qu'il puisse pivoter soit devant un agencement de toilettes, soit devant un compartiment de stockage.

4. Cabine de passagers selon l'une quelconque des revendications précédentes, dans laquelle le second module de segment latéral (2, 110, 114, 116) comprend au moins un espace de stationnement (8, 10, 42, 54, 60, 62, 64) pour un chariot de cabine (14) et au moins un compartiment de rangement (18, 20, 24) pour recevoir des objets.

5. Cabine de passagers selon l'une quelconque des revendications précédentes, dans laquelle un espace de stationnement (8, 10, 42, 54, 60, 62, 64) du second module de segment latéral (2, 110, 114, 116) comprend des dimensions permettant d'accueillir un fauteuil roulant (16, 140) dans son état replié.

6. Cabine de passagers selon l'une quelconque des revendications précédentes, dans laquelle l'au moins un module central (26, 48, 58) accueille un second agencement de toilettes avec au moins un compartiment de toilettes (34, 50, 118, 120).

7. Cabine de passagers selon la revendication 6, dans laquelle le second agencement de toilettes est disposé sur un côté du module central (26, 48, 58), lequel côté fait face au premier agencement de toilettes.

8. Cabine de passagers selon la revendication 6 ou 7,
dans laquelle l'au moins un module central (26, 48, 58) comprend au moins un espace de stationnement (42, 54, 60, 62, 64) pour au moins un chariot de cabine (14) et au moins un compartiment de stockage (44, 56, 68), et
dans laquelle le siège d'agent de bord (46, 104) est supporté sur l'au moins un module central (26, 48, 58) de telle manière qu'il peut pivoter devant une ouverture d'accès du second agencement de toilettes.

9. Cabine de passagers selon l'une quelconque des revendications précédentes, dans laquelle au moins une partie d'un module central (26, 48, 58) et d'un module de segment latéral (2, 72, 108, 110, 112, 114, 116) sont interconnectées sous la forme d'un module de segment latéral élargi (110, 114, 116).

10. Cabine de passagers selon les revendications 6 ou 7 et 8, dans laquelle le second agencement de toilettes a au moins un compartiment de toilettes (50) qui comprend un urinoir (52), lequel compartiment de toilettes (50) est disposé dans une direction transversale à côté de l'au moins un compartiment de stockage.

11. Cabine de passagers selon l'une quelconque des revendications 6 à 10, dans laquelle une paroi de séparation (126) est disposée entre un premier compartiment de toilette (120) et un second compartiment de toilette (118) adjacent, dans laquelle la paroi de séparation (126) est maintenue mobile et est conçue pour être amenée dans une position d'ouverture dans laquelle la séparation entre le premier compartiment de toilette (120) et le second compartiment de toilette (118) est annulée.

12. Cabine de passagers selon la revendication 11, dans laquelle la paroi de séparation (126) est conçue à partir de deux segments de paroi de séparation individuels (128, 130) qui sont maintenus de manière mobile.

13. Cabine de passagers selon la revendication 11 ou 12, dans laquelle un premier segment de paroi de séparation (128) est conçu pour être replié sur une première paroi latérale du premier compartiment de toilettes, tandis que le second segment de paroi de séparation (130) est conçu pour être pivoté dans une région qui n'est pas située dans le premier compartiment de toilettes (120) ou dans le second compartiment de toilettes (118).

14. Cabine de passagers selon l'une quelconque des revendications 11 à 13, dans laquelle une direction d'extension du premier compartiment de toilettes (120) et une direction d'extension du second compartiment de toilettes (118) sont disposées de manière à être essentiellement perpendiculaires l'une à l'autre.
